# EUROPEAN PATENT APPLICATION

(11) **EP 3 719 703 A1**
(43) Date of publication of application: **07.10.2020**
(21) Application number: 19799743.0
(22) Date of filing: 25.02.2019
(51) Int. Cl.: G06K 9/62

(54) **VEHICLE DAMAGE IDENTIFICATION PROCESSING METHOD, PROCESSING DEVICE, CLIENT AND SERVER**

(30) Priority: 08.05.2018 CN 201810433919
(71) Applicant: ALIBABA GROUP HOLDING LIMITED, George Town, Grand Cayman (KY)
(72) Inventor: ZHOU, Fan, Hangzhou, Zhejiang 311121 (CN)
(74) Representative: Slingsby Partners LLP
(86) International application number: PCT/CN2019/076030
(87) International publication number: WO 2019/214320

(57) **Abstract**

Embodiments of present disclosure provide a processing method, a processing apparatus, a user terminal, and a server for recognition of vehicle damage. The method of this disclosure provides a solution for automatically recognizing, on a terminal device, whether a vehicle damage is old damage, making it possible to recognize real-time whether a damage is old damage in photoing or videoing without human intervention, lower the requirement for expertise of the surveyors. Furthermore, information on the recognized suspected old damage may be automatically recorded and transmitted to a designated server system, for example, to insurance company, making it impossible to conceal the fact that the damage has been recognized as old damage even if a surveyor or a malicious user deletes the photograph or video of the old damage. It is possible to effectively reduce the risk of fraud, improve the reliability of damage recognition, improve the reliability of damage evaluation.

## Description

### TECHNICAL FIELD

The embodiments of the present disclosure pertain to the technical field of insurance data processing in computer terminal, and more particularly, to processing method, processing apparatus, user terminal and server for recognition of vehicle damage.

### BACKGROUND

Motor vehicle insurance, namely, vehicle insurance (or "car insurance"), refers to a type of commercial insurance that is liable for casualties or property damages caused by natural disasters or accidents to a motor vehicle. With the development of economy, the number of motor vehicles is increasing, and vehicle insurance has become one of the major insurance types in China's property insurance industry.

In vehicle insurance industry, the insurance company needs to evaluate the degree of damage to a vehicle so as to determine a list of items needing repair and a compensation amount, when the vehicle owner applies for compensation for a vehicle accident. Nowadays the evaluation mainly includes: conducting, by a surveyor from an insurance company or from a third-party evaluation institution, on-site evaluation of a vehicle involved in the accident, or alternatively, taking a photo of the vehicle involved in the accident under the guidance of an insurance company personnel, sending the photo through internet to the insurance company, and recognizing, by a damage evaluation personnel, the damage based on the photo. In application of the vehicle insurance, recognition of damage involving, e.g., the degree of damage, type of damage, whether the damage is an old damage or not, etc, largely depends on manual judgment based on experience of the surveyor. In practice, however, the evaluation involves much subjectivity as different surveyors may have different experience and different criteria, in particular, it would be hard for the surveyors to recognize malicious fraud in damage evaluation.

Therefore, there is an urgent need in the industry for a more efficient and reliable solution for recognition of vehicle damage.

### SUMMARY

It is an objective of the embodiments of the present disclosure to provide a processing method, a processing apparatus, a user terminal and a server for recognition of vehicle damage, by which a user can automatically recognize, on a terminal device, whether a vehicle damage is an old damage, and an immediate feedback can be provided for the recognized old damage in taking photos or videos, therefore it is possible to lower the requirement on experience of surveyors, and lower the loss caused to insurance companies by claims for old damages.

The processing method, processing apparatus, user terminal, and server for recognition of vehicle damage provided in embodiments of the present disclosure are implemented as follows.

There is provided a processing method for recognition of vehicle damage, comprising:
acquiring a captured picture of a vehicle;
determine, if a damage is recognized in said captured picture, whether said damage is an old damage using a trained first deep neural network;
displaying, if it is determined that the damage is an old damage, an indication that said damage is a suspected old damage in a camera view, by highlighting said indication in said camera view.

There is provided a processing method for recognition of vehicle damage, comprising:
receiving, from a user terminal, a determination that a damage is an old damage;
recognizing whether said damage is an old damage with a prescribed algorithm, wherein data used in the prescribed algorithm for recognizing whether said damage is an old damage include at least one of historical claim record of a vehicle owner, credit record of the vehicle owner, and data on connections between the vehicle owner and a related damage evaluation institution;
returning a recognition result to said user terminal.

There is provided a processing apparatus for recognition of vehicle damage, comprising:
a photographing module for acquiring a captured picture of a vehicle;
a damage determining module configured to determine, if a damage is recognized in said captured picture, whether said damage is an old damage using a trained first deep neural network;
a highlighting module configured to display, when it is determined that said damage is an old damage, an indication that said damage is a suspected old damage in a camera view, by highlighting said indication in said camera view.

There is provided a processing apparatus for recognition of vehicle damage, comprising:
a receiving module configured to receive a determination that a damage is an old damage from a user terminal;
an recognizing module configured to recognize whether said damage is an old damage with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution;
a returning module configured to return a recognition result to said user terminal.

There is provided a processing apparatus for recognition of vehicle damage, comprising a processor and a memory for storing processor-executable instructions, wherein the processor is configured to, in executing the instructions,
receive a determination that a damage is an old damage from a user terminal;
recognize whether said damage is an old damage with a prescribed algorithm, wherein data used in said prescribed algorithm for recognizing whether the damage is an old damage include at least one of historical claim record of a vehicle owner, credit record of the vehicle owner, and data on connections between the vehicle owner and a related damage evaluation institution;
return a recognition result to said user terminal.

There is provided a data processing apparatus for vehicle damage evaluation, comprising a processor and a memory for storing processor-executable instructions, wherein said processor is configured to, in executing the instructions,
acquire a captured picture of a vehicle;
determine, if a damage is recognized in said captured picture, whether said damage is an old damage using a trained first deep neural network;
display, if it is determined that the damage is an old damage, an indication that said damage is a suspected old damage in a camera view, by highlighting said indication in said camera view.

There is provided a user terminal comprising a processor and a memory for storing processor-executable instructions, wherein said processor is configured to, in executing the instructions,
acquire a captured picture of a vehicle;
determine, if a damage is recognized in said captured picture, whether said damage is an old damage using a trained first deep neural network; and
display, if it is determined that the damage is an old damage, an indication that said damage is a suspected old damage in a camera view, by highlighting said indication in said camera view.

There is provided a server comprising a processor and a memory for storing processor-executable instructions, wherein said processor is configured to, in executing the instructions,
receive a determination that a damage is an old damage from a user terminal;
recognize whether said damage is an old damage with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution;
returning a recognition result to said user terminal.

There is provided a system for processing damage evaluation comprising a user terminal and a server, wherein, a processor of said user terminal is configured to perform, in executing processor-executable instructions, the processes implemented by any one of the user terminals provided in this disclosure, and
a processor of said server is configured to perform, in executing processor-executable instructions, the processes implemented by any one of the servers provided in this disclosure.

As stated above, embodiments of the present disclosure provide a processing method, a processing apparatus, a user terminal, and a server for recognition of vehicle damage. The method of this disclosure provides a solution for automatically recognizing, on a terminal device, whether a vehicle damage is an old damage, which makes it possible to recognize in real time whether a damage is an old damage in taking a photo or video without human intervention, and therefore to lower the requirement for expertise of the surveyors. In addition, information on the recognized suspected old damage may be automatically recorded and transmitted to a designated server system, for example, transmitted to an insurance company, which makes it impossible to conceal the fact that the damage has been recognized as an old damage even if a surveyor or a malicious user deletes the photograph or video of the old damage. Therefore, it is possible to effectively reduce the risk of fraud, improve the reliability of damage recognition, and further to improve the reliability of damage evaluation.

### BRIEF DESCRIPTION OF DRAWINGS

In order to describe the technical solutions of the embodiments in the present disclosure or the prior art more clearly, the accompanying drawings for the embodiments or the prior art will be briefly introduced in the following. It is apparent that the accompanying drawings described in the following involve merely some embodiments provided in this disclosure, and those skilled in the art can derive other drawings from these accompanying drawings without creative efforts.
FIG. 1 is a schematic diagram of a model structure of a deep neural network used in one embodiment of the present disclosure;
FIG. 2 is a flow chart of an embodiment of a data processing method for vehicle damage evaluation as provided in the present disclosure;
FIG. 3 is a schematic diagram of a deep neural network model for determining presence of damage used in a method embodiment of the present disclosure;
FIG. 4 is a schematic diagram of an application scenario in which an old damage is marked out by a solid dot and red characters;
FIG. 5 is a flow diagram of another embodiment of the method provided in this disclosure;
FIG. 6 is a block diagram of a hardware structure of a user terminal to which interactive processing for vehicle damage evaluation according to an embodiment of the method or apparatus of the present disclosure is applied;
FIG. 7 is a schematic block diagram of an embodiment of processing apparatus for recognition of vehicle damage as provided in the present disclosure.

### DESCRIPTION OF EMBODIMENTS

In order to enable those skilled in the art to better understand the technical solutions in the present disclosure, the technical solutions of the embodiments in the present disclosure will be clearly and comprehensively described in the following with reference to the accompanying drawings. It is apparent that the embodiments as described are merely some, rather than all, of the embodiments of the present disclosure. All other embodiments obtained by those skilled in the art based on one or more embodiments described in the present disclosure without creative efforts should fall within the scope of this disclosure.

One embodiment provided in this disclosure may be applied to a system architecture of user terminal/server. The user terminal may include a terminal device having a photographing function used by persons involved in a vehicle accident (which may be the owner of an accident vehicle or an insurance company personnel or other persons conducting damage evaluation), such as smart phone, tablet computer, smart wearable equipment, special-purpose damage evaluation terminal, etc. The user terminal may have a communication module, and may be communicatively connected with a remote server to conduct data transmission with the server. The server may comprise a server on the side of an insurance company or a server on the side of a damage evaluation service provider, and may comprise other server of other service providers in other implementation scenarios, for example, a terminal of a parts supplier having a communication link with the server of the damage evaluation service provider, a terminal of a vehicle repair plant, and the like. The server may include a single computer device, a server cluster composed of a plurality of servers, or a server in a distributed system. In some application scenarios, the terminal may send the picture data captured in field to the server in real time, and the server may perform damage recognition, and may feedback the recognition result to the terminal. In implementation on the server side, the processing such as damage recognition are performed on the side of the server, in this case, the processing speed is generally higher than that on the terminal side, and pressure on the terminal can be relieved and the speed of damage recognition can be improved. Of course, this disclosure does not exclude that in other embodiments, all or part of the above-described processing is implemented on the terminal side, for example, the terminal side performs real-time detection and recognition of damages.

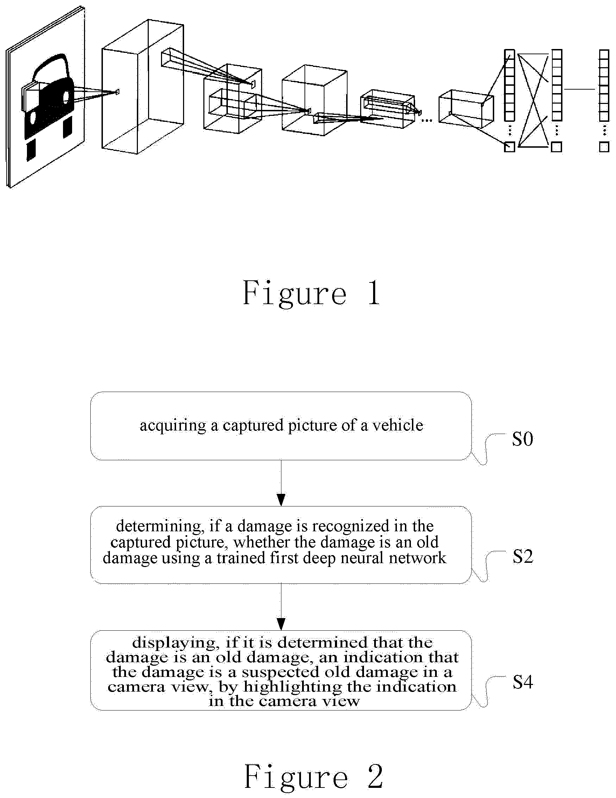

In general, old damages have certain visual features in their appearances, such as rust, lack of new scratches, or attached paint, traces, etc., from other vehicle or object. In one or more embodiments of this disclosure, a deep neural network may be constructed in advance and trained by using a pre-collected training sample pictures including old vehicle damages, which may be manually labeled in advance. By training the deep neural network with the samples, a recognition model including a classifier for predicting whether the vehicle damage is an old one can be obtained. The deep neural network may include a variety of neural network models, and a preferred embodiment may use a Convolutional Neural Network (CNN) for training. In general, the convolutional neural network has a relatively powerful picture classification/prediction capability. In some embodiments of the present disclosure, the network model structure, e.g., the number of hidden layers, may be designed according to implementation scenarios and design requirements, or the training model may be constructed by incorporating a pooling layer and a fully connected layer. FIG. 1 is a schematic diagram of a model structure of a deep neural network used in one embodiment of the present disclosure. It should be noted that the network model shown in FIG. 1 may be a first deep neural network used by a user terminal or a second deep neural network used by a server. Once it is determined by the neural network that the damage is an old damage, an indication may be presented in the viewfinder of the terminal in a highlighted manner, by which it is not only possible to alert the user that the damage is an old damage, but also possible to suppress the initiative of a malicious user to claim for the old damage (in that the malicious user is notified that the damage has been determined as an old damage by the system, and the chance is greatly reduced).

In one or more embodiments of the present disclosure, the first or second deep neural network may be constructed offline in advance, and may be trained by using pre-selected sample pictures in which damages are labeled as old damage, and put into use online after the training. This disclosure does not exclude that the deep neural network may be built or updated / maintained on-line. If the computing capability is sufficient, the user terminal or server side may construct the deep neural network on-line, and the constructed deep neural network can be put into on-line use instantly to recognize whether a captured picture includes an old damage.

Taking a specific application in a mobile phone terminal as an example, an embodiment of this disclosure is described below. Specifically, FIG. 2 is a schematic flowchart of an embodiment of a data processing method for vehicle damage evaluation provided in the present disclosure. Although the present disclosure provides steps of method or structure of apparatus depicted in the following embodiments or drawings, the method or apparatus may include, based on conventional or non-inventive effort, more steps or modules, or fewer steps or modules as a result of combination. For those steps or structures that are not causally interrelated, the execution sequence of those steps or the module structure of the apparatus is not limited to that depicted in the embodiments or the drawings of the present disclosure. When applied in an actual device, server, or terminal product, the method or module structure can be implemented in sequence according to the method or module structure shown in the embodiment or the drawings or can be implemented in parallel (for example, in an environment of parallel processors or multi-thread processing, or even in an implementation environment of distributed processing and server clustering). Of course, the description of the following embodiments does not limit other technical solutions derivable based on the present disclosure. Specifically, as shown in FIG. 1, in an embodiment of the data processing method for vehicle damage evaluation as provided in the present disclosure, the method may include the following steps:
S0: acquiring a captured picture of the vehicle;
S2: determining, if a damage is recognized in the captured picture, whether the damage is an old damage by using a first deep neural network which is trained in advance;
S4: displaying, if it is determined that the damage is an old damage, an indication that the damage is a suspected old damage in a camera view, by highlighting the indication in the camera view.

In this embodiment, the terminal on the user side may be a smart phone, and the smart phone may have a photographing function. The user can open an app on the smart phone, which implements the embodiment of the present disclosure, at the scene of accident to take photos of the scene. As the app is opened on the user terminal, a camera view may be shown on the display of the user terminal, and the vehicle can be photographed with the camera view. The camera view may be a video shooting window for the terminal to film (picture capturing) the scene of a vehicle damage, and picture information acquired by the camera device integrated in the user terminal may be displayed in the camera view. The specific interface of the camera view and the displayed information may be customized.

A captured picture of the vehicle may be obtained in photographing the vehicle, and with which it is possible to recognize whether there is a damage in the picture.

In some embodiments of the present disclosure, the damage recognition process may be performed on the side of the user terminal, or alternatively may be performed on the side of the server, in this case the server may be referred to as a damage recognition server. In some application scenarios, or if the computing capability allows, the picture captured by the user terminal may be used in a damage recognition or some other data processes for damage evaluation performed locally on the user terminal, which may reduce network traffic. Of course, as mentioned earlier, the computing power on the server side is generally stronger than that on the terminal side. In another embodiment of the method provided in this disclosure, the damage recognition process may be performed on the server side. Specifically, recognizing presence of a damage in the captured picture may comprise:
S20: sending the captured picture acquired by photographing to the damage recognition server;
S22: receiving a damage recognition result returned by the server. The damage recognition result may be obtained by the damage recognition server in recognizing presence of damage in the captured picture using a damage recognition model, which may be constructed in advance.

In the above embodiments, the terminal or the server may use a deep neural network constructed and trained in advance or in real-time to recognize a damage in the picture, including location of the damage, damaged part, type of damage, and the like.

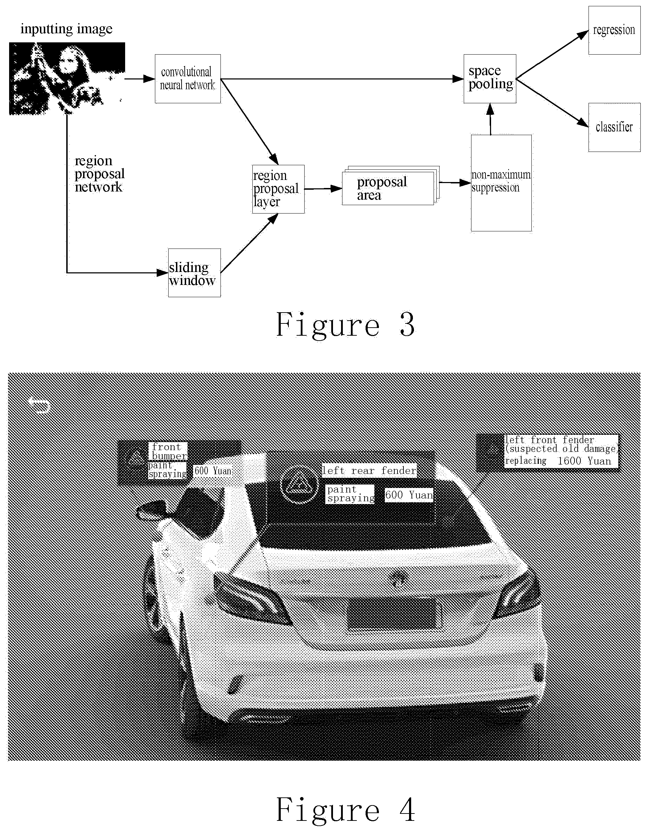

The deep neural network can be applied in object detection and semantic segmentation, and for the input picture, locating the position of the object in the picture. FIG. 3 is a schematic diagram of a deep neural network model for recognizing presence of damage used in the method embodiments. In FIG. 3, a typical deep neural network Faster R-CNN is illustrated. A deep neural network can be trained with a large number of pictures having the damage area labeled in advance. Among those pictures, there are damage areas shown up in various orientations and illuminations. In addition, in some embodiments of the present disclosure, a network architecture customized for a mobile device may be used, such as a network architecture based on typical MobileNet, SqueezeNet or modifications thereof, so that the model for recognizing damage can operate in an environment of the mobile device with lower power consumption, less memory, and slower processor, e.g., the mobile runtime environment of the user terminal.

After it is determined that the damage is an old damage, an indication that the damage is an old damage may be displayed in the camera view of the user terminal. The determination that the damage is an old damage is based on data processing of the captured pictures, and in some implementation scenarios, features of the new and old damages may be very close to each other, therefore a new damage may be recognized mistakenly as an old damage. Therefore, in an embodiment of the present disclosure, the recognized old damage may be indicated as a suspected old damage when displayed on the user terminal. The indication that the damage is an old damage may be displayed in the camera view in a highlighting manner. Highlighting means the damage area is marked out in the camera view in some particular way, so that the damage area can be easily noticeable or more outstanding. In this embodiment, there is no limitation on the highlighting, the highlighting is merely subject to constraint of practical scenario and desired effect.

In another embodiment of the method provided in this disclosure, the highlighting may comprise:
S40: marking out the indication with a predetermined marking sign, the predetermined marking sign may include one of the following:

text, dot, leading line, regular graphic frame, irregular graphic frame, and customized graphic.

FIG. 4 is a schematic diagram of a common application in which a solid dot and red text are used to mark the old damage. In FIG. 4, new damages are recognized in the front bumper and the left rear fender, with the indication message being green text. Of course, in other embodiments, the predetermined marking sign may be in other forms such as leading line, regular graphic frame, irregular graphic frame, customized graphic, etc. In other embodiments, text, character, data and the like may be used to mark the damage area, for instructing the user to take picture of the damage area. One or more predetermined marking sign may be used in presenting the indication. In this embodiment, predetermined marking sign are used to mark the damage area, therefore it is possible to show the area of damage more clearly in the camera view, and to assist the user to quickly locate the damage and take the picture.

In another embodiment of the method provided in this disclosure, a dynamic effect may be applied to the indication in order to alert the user that the damage is an old damage in a more noticeable way. In particular, in another embodiment, the highlighting may include:
S400: applying an animation, which may include at least one of color change, size change, rotation and bouncing, to the predetermined marking sign.

In some embodiments of the present disclosure, boundary of the damage area may be displayed in an AR (augmented reality) overlay. The AR generally refers to a technique for calculating a position and angle of a camera picture in real time, and superposing corresponding pictures, videos and 3D models. This technique enables superposing a virtual world onto the real world on a screen as well as interaction therebetween. The AR model may be matched to position of the real vehicle in photographing, for example, the constructed 3D contour may be superposed onto the contour of the real vehicle, and the matching may be regarded accomplished when the two completely match or the degree of matching reaches a threshold. In the specific matching process, a guidance may be provided for the direction of viewfinder, therefore the user can align the constructed contour with the contour of the photographed real vehicle by changing the photographing direction or angle under the guidance. By introducing AR technique into the embodiment of the present disclosure, not only information of the real vehicle captured by the user terminal is presented, but also information of the constructed AR model for the vehicle is simultaneously displayed. These two information are presented as a mutual supplementation and superposition, bringing about a better experience in damage evaluation.

In the above embodiment, an implementation is described that the indication is presented by text. In another embodiment, the indication may further include picture, voice, animation, vibration and the like, and the user is guided by an arrow or voice to point the current camera view to a certain area. Accordingly, in another embodiment of the method, the form of the indication presented in the current camera view includes at least one of symbol, text, voice, animation, video, and vibration.

The app in the terminal may automatically return the recognition result showing that a damage is an old damage to the system backstage for storage, and for subsequent manual or automatic damage evaluation, which makes it possible to avoid or reduce the risk of a user using the old damage to conduct an insurance fraud. Accordingly, in another embodiment of the method provided in this disclosure, after it is determined that the damage is an old damage, the method may further comprise:
S6: sending data information indicating that the damage is an old damage to a predetermined server.

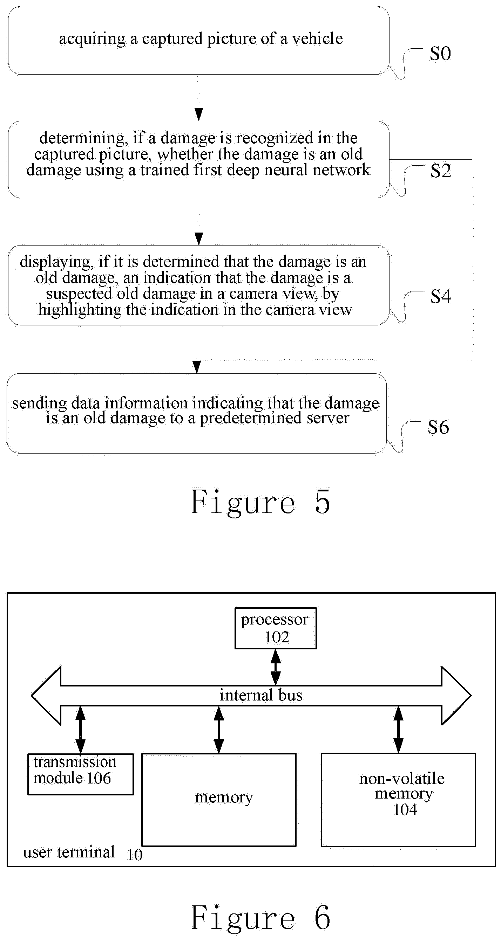

FIG. 5 is a schematic flow chart of another embodiment of the method provided in this disclosure. The predetermined server may include a server on the side of insurance company, or alternatively, the recognition result may be stored in a server on the terminal side, and then transmitted back to the insurance company back-end system asynchronously when network conditions permit, for further review of the case. Therefore, even if the surveyor on the scene deletes the photos and takes photos of other places, the recognition result is still visible in the back-end system, which further increases the difficulty of fraud conducting.

It should be noted that the term "real-time" used in the above embodiments may include sending, receiving or presenting immediately after acquisition or determination of certain data information. As will be understood by those skilled in the art, a transmission, reception or presentation after caching or anticipated calculation or waiting still belong to the scope of definition of the term "real-time". The term "picture" used in embodiments of the present disclosure may include video, which may be regarded as a set of consecutive pictures.

In addition, in an embodiment of the present disclosure, the recognition result indicating an old damage may be sent to the predetermined server for storage, which makes it possible to effectively prevent the insurance fraud conducted by tampering the damage evaluation data. Therefore, the embodiment of the present disclosure can also improve the data security of the damage evaluation process and the reliability of the damage evaluation result.

In another embodiment, since the processing capability of the mobile terminal is limited, the back-end system may further analyze the photos or videos uploaded by the APP with a more sophisticated deep neural network (which may be referred to herein as a second deep neural network), taking advantage of the more powerful processing capability of the server. A more comprehensive and accurate determination as to whether the damage is an old damage may be made by means of machine learning, by taking the determination made by the above-mentioned user terminal or server with the first-deep neural network as an input, together with some other information possessed by the insurance company or legitimately acquired and authorized by a third party (such as the vehicle owner's credit record, the historical claim record of the vehicle, the connections among the vehicle owner, the surveyor and the repair plant, and the geographical location). It should be noted that the server may determine whether the damage is an old damage by using other machine learning algorithms, and the present disclosure is not limited to deep neural network. Accordingly, in another embodiment of the method provided in this disclosure, after determining that the damage is an old damage, the method may further comprise:
S80: sending to the server a determination that the damage is an old damage.
S82: receiving a recognition result regarding whether the damage is an old damage obtained by the server using a prescribed algorithm. The data used in the prescribed algorithm for recognizing whether the damage is an old damage may include at least one of historical claim record of the vehicle owner, credit record of the vehicle owner, and data on connections between the vehicle owner and the related damage evaluation institution.

As described above, the prescribed algorithm may include a deep neural network, or may include other machine learning algorithms, such as a customized algorithm.

In the above embodiment, it is described that the user conducts a data processing for vehicle damage evaluation on a mobile phone terminal. However, it should be noted that the method described above in the embodiments of the present disclosure may be applied in various processing apparatus, such as special-purpose damage evaluation terminal, and may be applied in an implementing scenario involving a client/server architecture.

On the basis of the foregoing description, the present disclosure also provides a processing method for recognition of vehicle damage on the server side, which may specifically include:
receiving a determination that the damage is an old damage from a user terminal;
identifying whether the damage is an old damage by using a prescribed algorithm, the data used for determining whether the damage is an old damage including at least one of historical claim record of the vehicle owner, credit record of the vehicle owner, and data on connections between the vehicle owner and the related damage evaluation institution;
returning a recognition result to the user terminal.

The embodiments of the method in the present disclosure are described in a progressive manner, which means descriptions of each embodiment are focused on the differences from other embodiments, and the descriptions of the same or similar aspects of the embodiments are applicable to each other. For the embodiments involving apparatus and server, reference can be made to the method embodiments.

The method embodiments as provided in this disclosure may be implemented on a mobile terminal, a PC terminal, a special-purpose damage evaluation terminal, a server, or a similar computing device. As an example of implementation on a mobile terminal, FIG. 6 shows a block diagram of a hardware structure of a user terminal to which an interactive processing for vehicle damage evaluation according to an embodiment of the method or device of the present disclosure is applied. As shown in FIG. 6, the user terminal 10 may include one or more (only one is shown in this figure) processors 102 (the processors 102 may include, but are not limited to, processing devices such as a microprocessor MCU or programmable logic device FPGA), a memory 104 for storing data, and a transmission module 106 for communication functions. Those of ordinary skill in the art will appreciate that the structure shown in FIG. 6 is merely schematic and does not limit the structure of the electronic devices described above. For example, the user terminal 10 may include more or fewer components than those shown in FIG. 6, for example, may further include other processing hardware, such as a GPU (Graphics Processing Unit), or have a different configuration from that shown in FIG. 6.

The memory 104 may store software programs and modules of application software, such as program instructions / modules corresponding to the methods in embodiments of the present disclosure. The processor 102 may implement various functionalities and data processing by running the software programs and modules stored in memory 104, that is, to realize the processing method shown on above-mentioned navigation interactive interface. The memory 104 may include high-speed random access memory, and may also include non-volatile memory, such as one or more magnetic storage devices, flash memories, or other non-volatile solid state memories. In some examples, the memory 104 may further include memory remotely disposed with respect to the processor 102, which may be connected to the user terminal 10 via network. Examples of such network include, but are not limited to, the Internet, an intranet, a local area network, a mobile communication network, and combinations thereof.

The transmission module 106 is configured to receive or send data via a network. A specific example of the network may include a wireless network provided by a communication provider of the computer terminal 10. In one example, the transmission module 106 includes a Network Interface Controller (NIC), which may be connected to other network devices via a base station so as to communicate with the Internet. In one example, the transmission module 106 may be a Radio Frequency (RF) module for communicating with the Internet wirelessly.

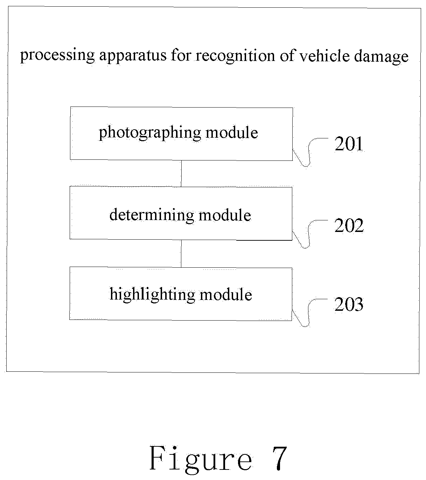

On the basis of the method described above, the present disclosure further provides a processing apparatus for recognition of vehicle damage. The apparatus may include a system (including a distributed system), software (app), modules, parts, servers, user terminals, etc. implementing the methods described in the embodiments of the present disclosure and incorporated with any necessary hardware. Based on the same inventive concept, a processing apparatus in an embodiment provided in the present disclosure will be described below. Because the implementation of the apparatus is similar to that of the method, for specific implementation of the processing apparatus in the present disclosure, reference can be made to implementation of the method mentioned above, and repetitive details may be omitted. Although the apparatus described in the following embodiments is preferably implemented as software, implementation of hardware or a combination of software and hardware may also be conceived. Specifically, as shown in FIG. 7, FIG. 7 is a block diagram of an embodiment of a processing apparatus for recognition of vehicle damage provided in this disclosure, which may specifically include:
a photographing module 201 configured to acquire a captured picture of a vehicle;
a determining module 202 configured to determine, if a damage is recognized in the captured picture, whether the damage is an old damage by using a trained first deep neural network;
a highlighting module 203 configured to display, when it is determined that the damage is an old damage, an indication that the damage is a suspected old damage in a camera view, by highlight the indication in the camera view.

On the basis of the foregoing method embodiment, there is further provided a processing apparatus for recognition of vehicle damage on the server side, comprising:
a receiving module configured to receive a determination that a damage is an old damage from a user terminal;
an recognizing module configured to recognize whether said damage is an old damage with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution;
a returning module configured to return a recognition result to said user terminal.

It should be noted that the apparatus of the above embodiments may include other implementations according to the related method embodiments, for example, may further comprise a presenting module for presenting the information, an AR displaying module for performing AR processing, and the like. For specific implementations, reference can be made to descriptions for the method embodiments, which is not repeated herein.

The processing methods for recognition of vehicle damage provided in embodiments of the present disclosure may be implemented by a processor in a computer executing corresponding program instructions, for example, may be implemented on a PC/server by using a C++ /java language in a Windows/Linux operating system, or implemented by using a corresponding application design language in another system such as Android and iOS and in combination with necessary hardware, or implemented based on the processing logic of a quantum computer. Specifically, in an embodiment provided in the present disclosure, in which a processing apparatus for vehicle damage evaluation implements the above-described methods, the processing apparatus may include a processor and a memory for storing processor-executable instructions, and when executing the instruction, the processor implements the following operations:
acquire a captured picture of a vehicle;
determine, if a damage is recognized in the captured picture, whether the damage is an old damage using a trained first deep neural network;
display, if it is determined that the damage is an old damage, an indication that the damage is a suspected old damage in a camera view, by highlighting the indication in the camera view.

According to the foregoing method embodiments, in another embodiment of the processing apparatus, the processor may further:
communicate a determination that the damage is an old damage to a server;
receive a recognition result regarding whether the damage is an old damage obtained by the server with a prescribed algorithm, wherein data used in the prescribed algorithm for recognizing whether the damage is an old damage include at least one of historical claim record of a vehicle owner, credit record of the vehicle owner, and data on connections between the vehicle owner and a related damage evaluation institution.

According to the foregoing method embodiments, in another embodiment of the processing apparatus, the highlighting may comprise:
marking out the indication by using a predetermined marking sign, wherein the predetermined marking sign comprises any one of:
a text, a dot, a leading line, a regular graphic frame, an irregular graphic frame, and a customized graphic.

According to the foregoing method embodiments, in another embodiment of the processing apparatus, the highlighting may comprise:
applying an animation to the predetermined marking sign, wherein the animation includes at least one of color change, size change, rotation, and bouncing.

According to the foregoing method embodiments, in another embodiment of the processing apparatus, the processor may further:
send data information indicating that the damage is an old damage to a predetermined server.

According to the foregoing method embodiments, in another embodiment of the processing apparatus, the indication may be in a form of at least one of symbol, character, voice, animation, video, and vibration

According to the foregoing method embodiments, in another embodiment of the processing apparatus, the processing apparatus may include a processor and a memory for storing processor-executable instructions, and when executing the instruction, the processor implements the following operations:
receiving a determination that a damage is an old damage from a user terminal;
recognizing whether the damage is an old damage with a prescribed algorithm, wherein data used in the prescribed algorithm for recognizing whether the damage is an old damage include at least one of historical claim record of a vehicle owner, credit record of the vehicle owner, and data on connections between the vehicle owner and a related damage evaluation institution;
returning a recognition result to the user terminal.

It should be noted that the processing apparatus of the above embodiments may be extended to other implementations in accordance with the related method embodiments. For specific implementations, reference can be made to descriptions of the method embodiments, and repetitive description may be omitted herein.

The instructions described above may be stored in a variety of computer-readable storage media. The computer-readable storage media may include physical devices for storing information, which may store, after digitalization, information in electrical, magnetic or optical manner. The computer-readable storage media in this embodiment may include an apparatus for storing information in an electronic manner, such as RAM, ROM, and the like; an apparatus for storing information in a magnetic manner, such as a hard disk, a floppy disk, a magnetic tape, a magnetic core memory, a bubble memory, a USB flash disk; an apparatus for storing information in an optical manner, such as a CD or a DVD. Of course, there may be other types of memories, such as a quantum memory, a graphene memory, and the like. The instructions in the apparatus or server or user terminal or system described in the embodiments of this disclosure may be stored as above.

Embodiments of the method or apparatus described above may be applied in a user terminal on the user side, such as a smartphone. Therefore, provided in this disclosure is a user terminal comprising a processor and a memory for storing processor-executable instructions, and the processor implements the following operations when executing the instructions:
acquiring a captured picture of a vehicle;
determining, if a damage is identified in the captured picture, whether the damage is an old damage using a trained first deep neural network;
display, if it is determined that the damage is an old damage, an indication that the damage is a suspected old damage in a camera view, by highlighting the indication in the camera view.

This disclosure further provides a server comprising a processor and a memory for storing processor-executable instructions. The processor is configured to, in executing the instructions,
receive a determination that a damage is an old damage from a user terminal;
recognize whether the damage is an old damage with a prescribed algorithm, data used in the prescribed algorithm for recognizing whether the damage is an old damage include at least one of historical claim record of a vehicle owner, credit record of the vehicle owner, and data on connections between the vehicle owner and a related damage evaluation institution;
return a recognition result to the user terminal.

In light of the foregoing description, an embodiment of the present disclosure provides a system for processing damage evaluation comprising a user terminal and a server, a processor of the user terminal is configured to implement, in executing processor-executable instructions, steps of the method of any embodiment on the terminal side, and
a processor of the server is configured to implement, in executing processor-executable instructions, steps of the method of any embodiment on the server side.

The embodiments of the apparatus, user terminal, server and system in the present disclosure are described in a progressive manner, which means descriptions of each embodiment are focused on the differences from other embodiments, and the descriptions of the same or similar aspects of the embodiments are applicable to each other. In particular, for the embodiments involving hardware plus program, of which essence is analogous to that of the method embodiments, reference can be made to the method embodiments, and detailed description may be omitted.

Particular embodiments of the present disclosure have been described above. There may be other embodiments which fall within the scope of the appended claims. Under some circumstances, the operations or steps included in the claims may be performed in an order different from that described in the embodiments and the desired result can still be achieved in this case. In addition, the processes depicted in the drawings do not have to be performed in the specific order as depicted or performed in a consecutive sequence to achieve the desired result. In some embodiments, multitask processing and parallel processing are also possible or may be advantageous.

It is to be noted that although this disclosure provides operation steps as depicted in the embodiment or flowchart, more or fewer operation steps may be included as necessary without involving creative efforts. The order of the steps as described in the embodiments is merely one of many orders for performing the steps, and rather is not meant to be unique. In practical implementation in a system or an apparatus, the steps can be either performed in the order depicted in the embodiments or the drawings, or be performed in parallel (for example, in an environment of parallel processors or multi-thread processing).

Although data acquisition, position arrangement, interaction, calculation, and determination such as AR technique, CNN training, damage recognition performed by user terminal or server, and interactions between the user terminal and server have been mentioned in the embodiments of the present disclosure, the embodiments of the present disclosure do not necessarily conform to industry communication standards, standard mage data processing protocols, communication protocols, and standard data models / templates or those described in embodiments of the present disclosure. An implementation based on some industry standards or derived from the described embodiments with minor modifications can also achieve an effect that is same as, equivalent to, or similar to, or anticipatable from that of the above-described embodiments. An embodiment derived from the altered or modified acquisition, storage, determination, and processing of data is still within the scope of embodiments of the present disclosure.

In the 1990s, it is easy to tell whether a technical improvement is a hardware improvement (for example, an improvement to a circuit structure such as a diode, a transistor, a switch, etc.), or a software improvement (an improvement to a methodical process). However, with the development of technologies, many improvements to methodical processes nowadays can be regarded as improvements to the hardware circuit structures. Basically all improved methodical processes can be programmed into a hardware circuit to obtain corresponding hardware circuit structures. Therefore, it cannot be ruled out to implement an improvement to a methodical process with a physical hardware module. For example, a Programmable Logic Device (PLD) (e.g., Field Programmable Gate Array (FPGA)) is an integrated circuit of which logical functions are determined by user's programming of the device. The designer programs by himself to "integrate" a digital system into a piece of PLD, without needing to design and manufacture the ASIC chip by a chip manufacturer. Moreover, at present, instead of manually manufacturing the integrated circuit chips, such programming is mostly implemented by using software "logic compiler", which is similar to the software compiler used for program development, and the source codes to be compiled should be written in a specific programming language referred to as Hardware Description Language (HDL). There are many kinds of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, Ruby Hardware Description Language (RHDL), etc., and currently the most commonly used is Very-High-Speed Integrated Circuit Hardware Description Language (VHDL) and Verilog. It is comprehensible to those skilled in the art that a hardware circuit that implements a methodical process can be easily obtained by adequately programming the methodical process into an integrated circuit with the aforementioned hardware description languages.

The controller may be implemented in any suitable way. For example, the controller may take the form of, for instance, a microprocessor or processor, and a computer readable medium storing computer readable program codes (e.g., software or firmware) executable by the (micro) processor, a logic gate, a switch, an application-specific integrated circuit (ASIC), a programmable logic controller, and an embedded microcontroller. Examples of the controller include, but not limited to, the microcontrollers such as ARC 625D, Atmel AT91SAM, Microchip PIC18F26K20, and Silicone Labs C8051F320. A memory controller may also be implemented as a part of control logic of the memory. As known to those skilled in the art, in addition to implementing the controller in the form of the pure computer readable program codes, it is definitely possible to embody the method in a program to enable a controller to implement the same functionalities in the form of such as a logic gate, a switch, an application-specific integrated circuit, a programmable logic controller, or an embedded microcontroller. Thus, such a controller may be regarded as a hardware component, while means included therein for implementing respective functions may be regarded as parts in the hardware component. Furthermore, the means for implementing respective functions may be regarded as both software modules that implement the method and parts in the hardware component.

The system, apparatus, modules or units described in the foregoing embodiments can be implemented by a computer chip or entity, or implemented by a product having a specific function. Atypical device implementation is a computer. Specifically, the computer can be, for example, a personal computer, a laptop computer, vehicle-onboard human-machine interaction device, a cellular phone, a camera phone, a smart phone, a personal digital assistant, a media player, a navigation device, an email device, a game console, a tablet computer, a wearable device, or a combination of any of these devices.

It is to be noted that although this disclosure provides operation steps as depicted in the embodiment or flowchart, more or fewer operation steps may be included as necessary without involving creative efforts. The order of the steps as described in the embodiments is merely one of many orders for performing the steps, and rather is not meant to be unique. In practical implementation in a system or an apparatus, the steps can be either performed in the order depicted in the embodiments or the drawings, or be performed in parallel (for example, in an environment of parallel processors or multi-thread processing). It is to be comprehended that, the terms "comprise", "include" or any other variant thereof do not mean to be exclusive in that a process, a method, a product or a device comprising or including a number of elements may comprise or include not only those elements, but also other elements not explicitly listed, or may further comprise or include elements inherent to such process, method, product or device. It is not excluded that a process, method, product or device comprising an element may further comprise other elements, if not specifically prescribed.

For ease of description, an apparatus is broken down into units by functionalities to be described respectively. However, in practical implementation, the function of one unit may be implemented in a plurality of software and/or hardware entities, or vice versa, the functions of a plurality of units may be implemented in a single software and/or hardware entity. The apparatus embodiments described above are merely illustrative. For example, the division of the units is merely a division of logical functions and there can be some other divisions in actual implementation. For example, a plurality of units or components can be combined or integrated into another system, or some features can be ignored or not performed. In addition, the displayed or discussed mutual couplings or direct couplings or communication connections can be implemented by using some interfaces. The indirect couplings or communication connections between the apparatuses or units can be implemented in electrical, mechanical, or other forms.

As known to those skilled in the art, in addition to implementing the controller in the form of the pure computer readable program codes, it is definitely possible to embody the method in a program to enable a controller to implement the same functionalities in the form of such as a logic gate, a switch, an application-specific integrated circuit, a programmable logic controller, or an embedded microcontroller. Thus, such a controller may be regarded as a hardware component, while means included therein for implementing respective functions may be regarded as parts in the hardware component. Furthermore, the means for implementing respective functions may be regarded as both software modules that implement the method and parts in the hardware component.

The present invention has been described with reference to flowcharts and/or block diagrams of the method, device (apparatus) and computer program product of the embodiments in this disclosure. It should be understood that each process and/or block in the flowcharts and/or block diagrams and combinations of processes and/or blocks in the flowcharts and/or block diagrams can be implemented by computer program instructions. The computer program instructions may be provided to a general-purpose computer, a special-purpose computer, an embedded processor or a processor of other programmable data processing devices to form a machine, so that instructions executed by the computer or the processor of other programmable data processing devices form an apparatus configured to implement functions designated in one or more processes in a flowchart and/or one or more blocks in a block diagram.

The computer program instructions may also be stored in a computer readable memory which can guide the computer or other programmable data processing devices to operate in a specific manner, so that the instruction stored in the computer readable memory forms an article of manufacture comprising therein an instructing device, which implements functions designated in one or more processes in a flowchart and/or one or more blocks in a block diagram.

The computer program instructions may also be loaded to the computer or another programmable data processing device, such that a series of operational steps are executed on the computer or another programmable device to form a computer implemented processing, and therefore, the instruction executed in the computer or another programmable device provides steps for implementing functions designated in one or more processes in a flowchart and/or one or more blocks in a block diagram.

In a typical configuration, the computing device includes one or more central processing units (CPUs), an input/output interface, a network interface, and a memory.

The memory can include computer readable medium such as a volatile memory, a Random Access Memory (RAM), and/or non-volatile memory, e.g., a Read-Only Memory (ROM) or a flash RAM. The memory is an example of a computer readable medium.

The computer readable medium includes non-volatile and volatile medium as well as removable and non-removable medium, and can implement information storage by any method or technology. The information can be a computer readable instruction, a data structure, a program module or other data. An example of the storage medium of a computer includes, but is not limited to, a phase change memory (PRAM), a static random access memory (SRAM), a dynamic random access memory (DRAM), other types of RAM, a ROM, an electrically erasable programmable read-only memory (EEPROM), a flash memory or other memory technologies, a compact disk read-only memory (CD-ROM), a digital versatile disc (DVD) or other optical storage devices, a cassette tape, a magnetic tape/magnetic disk storage device, a graphene storage device or other magnetic storage devices, or any other non-transmission medium, and can be used to store information accessible to the computing device. According to the definition in this context, the computer readable medium does not include transitory media, such as a modulated data signal and a carrier wave.

Those skilled in the art should understand that the embodiments of the present disclosure can be provided as a method, a device, or a computer program product. Therefore, the embodiments of the present disclosure may be implemented in a form of an absolute hardware embodiment, an absolute software embodiment, or an embodiment combining software and hardware. Moreover, the embodiments of the present disclosure can be in the form of a computer program product implemented on one or more computer usable storage medium (including, but not limited to, a magnetic disk memory, a CD-ROM, an optical memory and the like) including computer program codes.

The present disclosure can be described in a general context of a computer executable instruction executed by a computer, for example, a program module. Generally, the program module may include a routine, a program, an object, a component, a data structure, and the like for performing a specific task or implementing a specific abstract data type. The present disclosure may also be implemented in a distributed computing environment. In the distributed computing environment, a task is performed by remote processing devices connected via a communication network. Further, in the distributed computing environment, the program module may be located in local and remote computer storage medium including a storage device.

The embodiments in the present disclosure are described in a progressive manner, which means descriptions of each embodiment are focused on the differences from other embodiments, and the descriptions of the same or similar aspects of the embodiments are applicable to each other. In particular, for the embodiments involving apparatus and server, of which essence is analogous to that of the method embodiments, reference can be made to the method embodiments, and detailed description may be omitted. In the descriptions of the present disclosure, terms such as "an embodiment", "some embodiments", "an example", "a specific example", or "some examples" mean that specific features, structures, materials, or characteristics described with reference to the embodiments or examples are included in at least one embodiment or example of the present disclosure. In the present disclosure, reference to the foregoing terms are not necessarily directed to the same embodiment or example. In addition, the described specific features, structures, materials, or characteristics can be combined in a proper manner in any one or more of the embodiments or examples. Furthermore, a person skilled in the art can combine different embodiments or examples described in the present disclosure, and combine features of different embodiments or examples, provided that there is no conflict.

The above descriptions involve merely some embodiments of the present disclosure, and are not intended to limit the present disclosure. Various modifications and variations may be made to the embodiments of the present disclosure by those skilled in the art. Any modifications, equivalents, improvements, and the like made within the spirit and principle of the present disclosure shall fall within the scope of the appended claims.

## Claims

1. A processing method for recognition of vehicle damage, comprising:
acquiring a captured picture of a vehicle;
determine, if a damage is recognized in said captured picture, whether said damage is an old damage using a trained first deep neural network;
displaying, if it is determined that the damage is an old damage, an indication that said damage is a suspected old damage in a camera view, by highlighting said indication in said camera view.

2. The method according to claim 1, further comprising, after it is determined that said damage is an old damage,
communicating a determination that said damage is an old damage to a server;
receiving a recognition result regarding whether said damage is an old damage obtained by the server with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution.

3. The method according to claim 1, further comprising, after it is determined that said damage is an old damage,
sending data information indicating that said damage is an old damage to a predetermined server.

4. The method according to claim 1, wherein highlighting said indication comprises:
marking out said indication with a predetermined marking sign,
wherein said predetermined marking sign comprises one of text, a dot, leading line, regular graphic frame, irregular graphic frame, and customized graphic.

5. The method according to claim 4, wherein highlighting said indication comprises:
applying an animation to said predetermined marking sign, wherein the animation includes at least one of color change, size change, rotation, and bouncing.

6. The method according to claim 1, wherein said indication is in a form of at least one of symbol, character, voice, animation, video, and vibration.

7. A processing method for recognition of vehicle damage, comprising:
receiving, from a user terminal, a determination that a damage is an old damage;
recognizing whether said damage is an old damage with a prescribed algorithm, wherein data used in the prescribed algorithm for recognizing whether said damage is an old damage include at least one of historical claim record of a vehicle owner, credit record of the vehicle owner, and data on connections between the vehicle owner and a related damage evaluation institution;
returning a recognition result to said user terminal.

8. A processing apparatus for recognition of vehicle damage, comprising:
a photographing module configured to acquire a captured picture of a vehicle;
a damage evaluation module configured to determine, if a damage is recognized in said captured picture, whether said damage is an old damage using a trained first deep neural network;
a highlighting module configured to display, when it is determined that said damage is an old damage, an indication that said damage is a suspected old damage in a camera view, by highlighting said indication in said camera view.

9. A processing apparatus for recognition of vehicle damage, comprising:
a receiving module configured to receive a determination that a damage is an old damage from a user terminal;
an recognizing module configured to recognize whether said damage is an old damage with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution;
a returning module configured to return a recognition result to said user terminal.

10. A processing apparatus for recognition of vehicle damage, comprising a processor and a memory for storing processor-executable instructions, wherein the processor is configured to, in executing the instructions,
receive a determination that a damage is an old damage from a user terminal;
recognize whether said damage is an old damage with a prescribed algorithm, wherein data used in said prescribed algorithm for recognizing whether the damage is an old damage include at least one of historical claim record of a vehicle owner, credit record of the vehicle owner, and data on connections between the vehicle owner and a related damage evaluation institution;
return a recognition result to said user terminal.

11. A data processing apparatus for vehicle damage evaluation, comprising a processor and a memory for storing processor-executable instructions, wherein said processor is configured to, in executing the instructions,
acquire a captured picture of a vehicle;
determine, if a damage is recognized in said captured picture, whether said damage is an old damage using a trained first deep neural network;
display, if it is determined that the damage is an old damage, an indication that said damage is a suspected old damage in a camera view, by highlighting said indication in said camera view.

12. The processing apparatus according to claim 11, wherein said processor is further configured to,
communicate a determination that said damage is an old damage to a server;
receive a recognition result regarding whether said damage is an old damage obtained by the server with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution.

13. The processing apparatus according to claim 11, wherein highlighting said indication comprises:
marking out said indication by using a predetermined marking sign, wherein said predetermined marking sign comprises any one of text, dot, leading line, regular graphic frame, irregular graphic frame, and customized graphic.

14. The processing apparatus according to claim 13, wherein highlighting said indication comprises:
applying an animation to said predetermined marking sign, wherein the animation includes at least one of color change, size change, rotation, and bouncing.

15. The processing apparatus according to claim 11, wherein said processor is further configured to,
send data information indicating that said damage is an old damage to a predetermined server.

16. The processing apparatus according to claim 11, wherein said indication is in a form of at least one of symbol, character, voice, animation, video, and vibration.

17. A user terminal comprising a processor and a memory for storing processor-executable instructions, wherein said processor is configured to, in executing the instructions,
acquire a captured picture of a vehicle;
determine, if a damage is recognized in said captured picture, whether said damage is an old damage using a trained first deep neural network; and
display, if it is determined that the damage is an old damage, an indication that said damage is a suspected old damage in a camera view, by highlighting said indication in said camera view.

18. A server comprising a processor and a memory for storing processor-executable instructions, wherein said processor is configured to, in executing the instructions,
receive a determination that a damage is an old damage from a user terminal;
recognize whether said damage is an old damage with a prescribed algorithm, wherein data used in said prescribed algorithm for recognizing whether said damage is an old damage include at least one of historical claim record of a vehicle owner, credit record of the vehicle owner, and data on connections between the vehicle owner and a related damage evaluation institution;
returning a recognition result to said user terminal.

19. A system for processing damage evaluation comprising a user terminal and a server, wherein,
a processor of said user terminal is configured to implement, in executing processor-executable instructions, steps of the method of any one of claims 1-6, and
a processor of said server is configured to implement, in executing processor-executable instructions, steps of the method of claim 7.
